# EUROPEAN PATENT APPLICATION

(11) **EP 1 400 403 A2**
(43) Date of publication of application: **24.03.2004**
(21) Application number: 03020585.0
(22) Date of filing: 18.09.2003
(51) Int. Cl.: B60P 3/20

(54) **Supporting assembly for a tilt-down partition for bodies of trucks, trailers or the like**

(30) Priority: 23.09.2002 IT BO20020600
(71) Applicant: Pastore & Lombardi S.r.l., 40057 Cadriano di Granarolo Emilia (Bologna) (IT)
(72) Inventor: Hilbe, Riccardo, 40125 Bologna (IT)
(74) Representative: Modiano, Guido, Dr.-Ing.

(57) **Abstract**

A supporting assembly for tilt-down partition for bodies of trucks, trailers or the like, comprising at least one longitudinal guide (2) that is rigidly coupled to the ceiling of the body and a carriage (3) that can slide along said guide (2) and to which the front side of said partition (4) is articulated and can be manually orientated from a stable upper end configuration, in which it is arranged substantially horizontally, to a stable lower end configuration, in which it is arranged substantially vertically, in order to separate different storage compartments within said body, the assembly further comprising cam-type means (5) for locking and releasing sliding of said carriage (3) along said guide (2) in said upper and lower configurations, said cam-type means being associated with said partition (4) and being adapted to allow the translational motion of said carriage (3) along said guide (2) in the intermediate configuration of said partition (4).

## Description

The present invention relates to a supporting assembly for a tilt-down partition for bodies of trucks, trailers or the like.

The body of trucks or trailers currently is often provided internally with one or more vertical partitions that are adapted to separate the overall loading volume of the body into separate compartments that are isolated one another; it is necessary to resort to this provision if the goods to be transported are of different kinds or if some types of goods need to be stored in particular environmental conditions (for example at low temperature).

Generally, partitions can slide along longitudinal guides that are rigidly coupled to the ceiling of the body, so that they can be positioned at the user's discretion depending on the storage requirements. In order to allow goods loading and unloading operations, partitions of the tilt-down type are very widely used, i.e., partitions that can be orientated manually from a vertical configuration for separating the compartments to a horizontal configuration in which they are parallel to the ceiling, allowing easy access to the inside of the body.

The partition is usually supported by a supporting assembly slideable along the guides of the ceiling, to which it is articulated about a horizontal pivoting axis. Known types of supporting assembly suffer considerable shortcomings in relation to the locking of the partitions along the ceiling guides in the selected position; this problem often requires the provision of very complex architectures, and further locking is rather troublesome and substantially scarcely reliable.

The horizontal and vertical configurations of the partitions, moreover, are scarcely stable: for this reason, insufficient safety is ensured for operators and for the transported goods both during loading and unloading and during transport.

The aim of the present invention is to provide a supporting assembly for tilt-down partition that allows to lock easily, safely and effectively the partition along the ceiling guides in the selected longitudinal position inside the body.

Within this aim, an object of the present invention is to provide a supporting assembly that ensures maximum stability of the partition both in the vertical configuration and in the horizontal configuration.

Another object of the present invention is to provide a structure that is simple, relatively easy to provide in practice, safe in use, effective in operation, and relatively low in cost.

This aim and these and other objects are all achieved by the present supporting assembly for tilt-down partition for bodies of trucks, trailers or the like, comprising at least one longitudinal guide that is rigidly coupled to the ceiling of the body and a carriage that can slide along said guide and to which the front side of said partition is articulated and can be orientated manually from a stable upper end configuration, in which it is arranged substantially horizontally, to a stable lower end configuration, in which it is arranged substantially vertically, in order to separate different storage compartments within said body, characterized in that it comprises cam-type means for locking and releasing sliding of said carriage along said guide in said upper and lower configurations, said means being associated with said partition and being adapted to allow the translational motion of said carriage along said guide in the intermediate configuration of said partition.

Further features of the invention will become better apparent from the detailed description of a preferred but not exclusive embodiment of a supporting assembly for tilt-down partition for bodies of trucks, trailers or the like according to the invention, illustrated by way of non-limitative example in the accompanying drawings, wherein:
Figure 1 is a partially sectional side elevation view of the supporting assembly according to the invention, with the partition in the stable upper end configuration;
Figure 2 is a partially sectional side elevation detail view of said assembly in the stable upper end configuration;
Figure 3 is a partially sectional side elevation detail view of the supporting assembly in the stable lower end configuration;
Figure 4 is a partially sectional detail top view of the supporting assembly in the stable lower end configuration;
Figure 5 is a partially sectional side elevation detail view of the assembly in an intermediate configuration;
Figure 6 is a partially sectional front view of the assembly in the stable lower end configuration.

With reference to the figures, the reference numeral 1 generally designates a supporting assembly for a tilt-down partition for bodies of trucks, trailers or the like according to the invention.

The assembly comprises at least one longitudinal guide 2, which is rigidly coupled to the ceiling of the body and along which a carriage 3 can slide horizontally; the front side of a tilt-down partition 4 is articulated to said carriage, and two parallel longitudinal guides 2 are preferably usually fixed along the ceiling of the body and are arranged substantially in a mirror-symmetrical fashion with respect to the plane of symmetry of the vehicle, each guide being associated with a respective carriage 3. In this manner, the partition 4 is supported in two points that are symmetrical with respect to said plane.

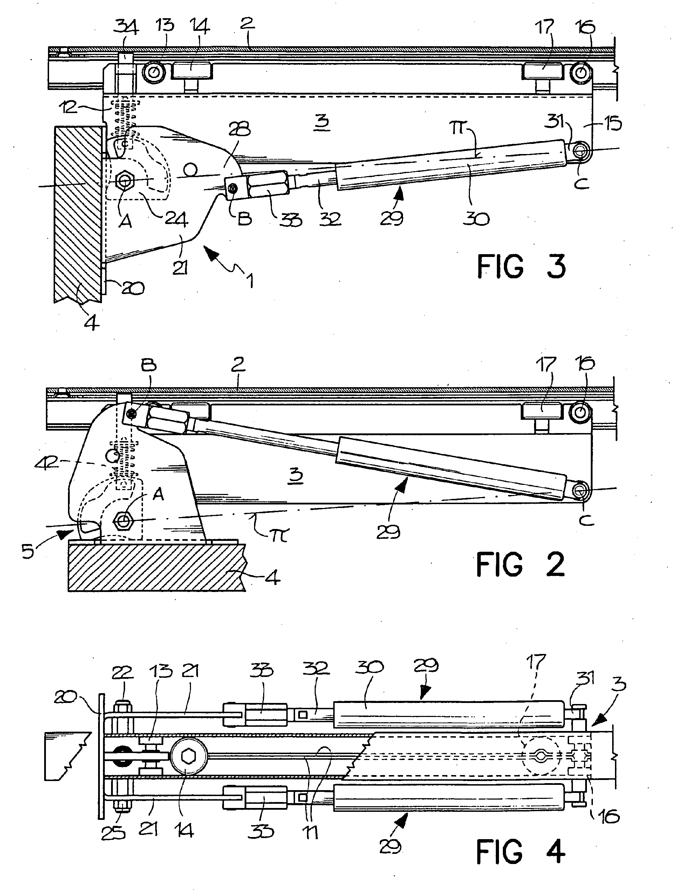

The partition 4 can be orientated manually from a stable upper end configuration (Figure 2), in which it is arranged substantially horizontally and parallel to the ceiling, to a stable lower end configuration (Figure 3), in which it is arranged substantially vertically in order to separate different storage compartments within the body.

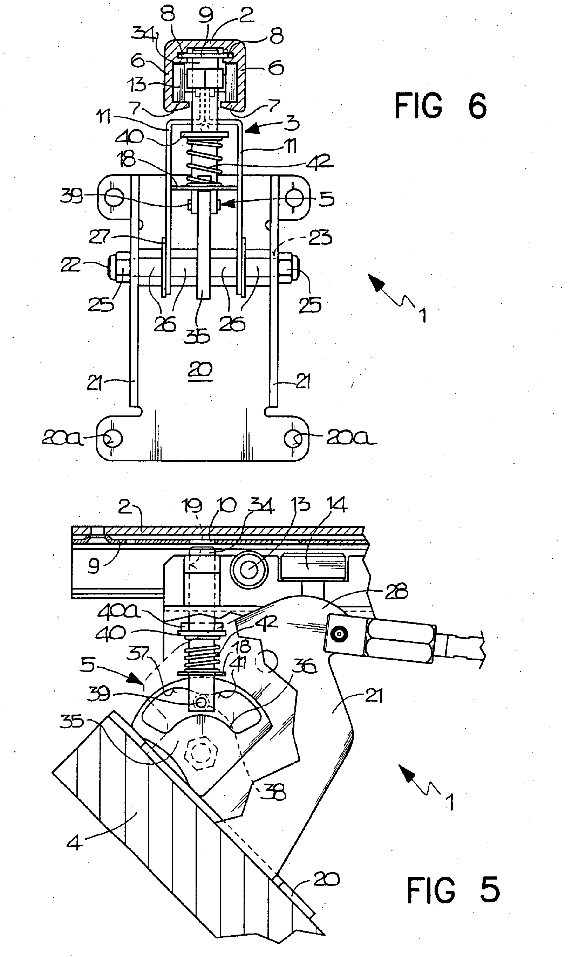

According to the invention, the supporting assembly comprises cam-type means 5 for locking and releasing the sliding of the carriage 3 along the respective longitudinal guide 2, which are adapted to position stably, in said upper and lower configurations, the partition 4 in the selected point inside the body; the cam-type locking and release means 5 are associated with the partition 4 and are also adapted to allow the free translational motion of the carriage 3 along the guide 2 in the intermediate configuration of the partition, shown in Figure 5 (i.e., preferably with the partition inclined at approximately 45° with respect to the ceiling of the body).

Each longitudinal guide 2, fixed to the ceiling of the body, for example by means of screws, has a transverse cross-section that is substantially shaped like a letter C that is open downward, with sides 6 folded so as to form respective parallel horizontal strips 7 (Figure 6); opposite longitudinal slots 8 are formed inside the guide and along the sides 6 in order to accommodate a narrow band 9 that is affected by a plurality of aligned circular holes 10, whose respective vertical axes lie on the longitudinal plane of symmetry of said guide 2.

The carriage 3 is constituted by a pair of elongated plates 11, which are arranged opposite each other and mirror-symmetrically with respect to a longitudinal plane of symmetry, are joined along their respective upper portions, and have lower portions that are folded so as to be divergent. A first pair of bearings having a horizontal axis 13 and a first wheel 14 having a vertical axis and a larger diameter are rotatably supported in an upward region at the front end 12 of the carriage 3; a second pair of bearings 16 having a horizontal axis and a second wheel 17 having a vertical axis and a larger diameter are rotatably supported in an upward region at the rear end 15 of the carriage.

The first and second pairs of bearings 13 and 16 having a horizontal axis are adapted to roll along the upper face of the horizontal strips 7 of the longitudinal guide 2; the first and second wheels 14 and 17 having a vertical axis are instead adapted to roll internally along the sides 6 of said guide, so as to allow sliding of the carriage 3 without appreciable plays.

At the front end 12 of the carriage 3 there is a transverse plate 18, which is rigidly coupled to the plates 11 at its opposite ends; the plate 18 is affected centrally by a circular opening. A cylindrical vertical through seat 19 is provided above the plate 18.

A bracket 20 (with fixing holes 20a for screws) is rigidly coupled at the front side of the partition 4 for articulation to the front end 12 of the carriage 3. The bracket 20 has two parallel side walls 21, which are perpendicular to the plane of the partition 4 and are arranged mirror-symmetrically with respect to the plane of symmetry of the carriage 3. The bracket 20 is articulated to the carriage about a first transverse horizontal axis A, by means of a pivot 22 that is inserted in opposite holes 23 provided in the central portion 24 of the side walls 21; the pivot 22 has threaded opposite ends, along which locking nuts 25 are screwed. A plurality of bushes 26 having a hexagonal cross-section is keyed to the pivot 22 for the centering and reference, with elastic axial locking rings 27, of the articulation to the carriage 3.

The side walls 21 of the bracket have respective end portions 28 to which the respective first ends of two parallel springs 29 are articulated about a second transverse horizontal axis B; said springs are pivoted, at their opposite second ends, to the rear end 15 of the carriage 3, about a third transverse horizontal axis C. The springs 29 are arranged mirror-symmetrically with respect to the vertical longitudinal plane of symmetry of the carriage and are preferably of the spring/damper type: the respective cylinder 30 of each spring is provided, at its end, with an eye 31 for pivoting to the carriage 3, and its stem 32 is provided with a head 33 for articulation to the end portion 28 of the respective wall 21.

When the partition 4 is in the upper end configuration, the second axis B lies above the imaginary plane Π on which the first axis A and the third axis C lie; when the partition is in the lower end configuration, the second axis B is located below said plane Π: in this manner, the action of the springs 29 produces, in these configurations, a retention torque that contrasts the spontaneous rotation of the partition 4 about the first axis A, thus giving stability.

The cam-type locking and release means 5 comprise a cylindrical pin 34, which is accommodated in the through seat 19 of the carriage 3 and is associated, in a downward region, with a cam 35 that is rigidly coupled to the bracket 20 and is adapted to produce, by manual orientation of the partition 4, the vertical translational motion of the pin 34 between an upper end position and a lower end position.

In its upper end position, the pin 34 is selectively inserted in one of the holes 10 of the band 9, so as to block the translational motion of the carriage 3 along the guide 2 in the upper and lower configurations of the partition 4; in its lower end position, which corresponds to the intermediate configuration of the partition, the pin 34 is disengaged from the respective hole 10, allowing the carriage 3 to slide along the guide 2. Elastic means are further provided which are adapted, in the stable upper and lower configurations, to keep the pin 34 inserted in the hole 10 in the upper end position.

The cam 35 is shaped substantially like a circular sector that is fixed to the bracket 20 along one of the sides, and is provided centrally with a contoured opening 36 that forms peripherally a rolling profile 37 for a roller 38 that is supported so that it can rotate about a lower pivot 39 that is fixed transversely through the base of the pin, said base being conveniently forkshaped; a collar 40 is rigidly coupled by means of an upper pivot 40a substantially in the centerline of the pin (Figure 5).

The profile 37 is provided mirror-symmetrically with respect to the plane of symmetry of the cam and is inclined substantially at 45° with respect to the plane of the partition 4. At said plane of symmetry, which is arranged substantially vertically when the partition 4 is in the intermediate configuration, the profile 37 has a convex portion 41, which is adapted to produce, by way of the rolling of the roller 38, the descent of the pin 34 from the upper end position to the lower end position and therefore its disengagement from the hole 10 of the band 9.

The elastic means for retaining the pin 34 in the upper end position are preferably constituted by a helical spring 42, which is mounted coaxially along the pin 34 and in which the lower end rests on the plate 18 and is rigidly coupled to the carriage 3 and the upper end is actuated by the collar 40.

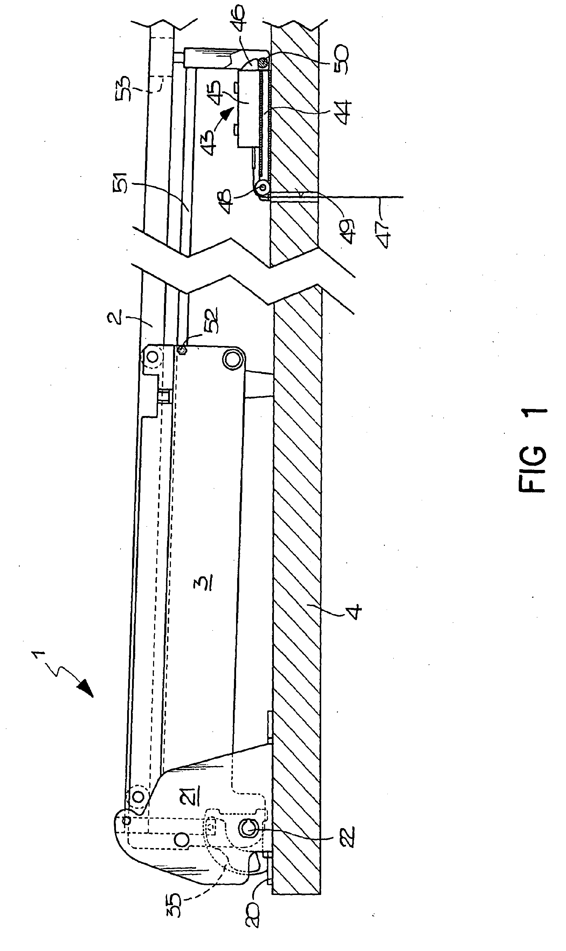

The partition 4 has, at the respective rear side, a latch-type device 43 for retaining said partition in the stable upper end configuration (Figure 1). The device comprises a fixing base 44 for a box-like body 45, in which a lug 46 can slide in contrast with a spring and is connected at the rear to a manual traction cable 47, which is wound on a pulley 48 and passes through a channel 49 formed in the partition 4.

The lug 46 abuts against a cross-member 50, which is fixed to a rear extension 51 of the carriage 3 (which is connected for example by means of a bolt 52) and is provided with a wheel 53 for rolling within the longitudinal guide 2.

Use of the supporting assembly according to the invention is as follows. During the loading of the body, the partition 4 is arranged in the stable upper configuration (Figures 1 and 2), i.e., it is arranged parallel to the ceiling in order to allow operators to arrange the goods easily. The stability of the partition 4 in the upper configuration is ensured by the spring/damper units 29; since the second axis B lies above the imaginary plane Π on which the first and third axes A and C lie, the springs 29 apply a retention torque that contrasts the spontaneous rotation of the partition 4 about the first axis A. Furthermore, the lug 46 of the latch-type retention device 43 is engaged on the cross-member 50. The pin 34, in the upper end position, is inserted in one of the holes 10 and is retained thereat by the helical spring 42, so that the translational motion of the carriage 3 along the respective longitudinal guide 2 is prevented.

During storage of the goods or upon its completion, it is necessary to move the partition 4 longitudinally inside the body, in order to move it into the most appropriate position, achieving optimum separation of the loading compartments. For this purpose, by gently pulling the cable 47 the lug 46 is disengaged from the cross-member 50; the partition 4 can now be rotated manually through approximately 45°, so that the roller 38 of the pin 34 rolls along the profile 37, starting from the end until it lies at the convex portion 41. This produces the vertical sliding of the pin 34 from the upper end position to the lower end position (Figure 5), with consequent disengagement from the hole 10 in which it is inserted: the partition 4 can thus be moved longitudinally inside the body by way of the rolling of the bearings 13 and 16 and of the wheels 14 and 17 along the guide 2.

Finally, when the intended longitudinal position is reached, the partition 4 must be arranged vertically in the lower configuration in order to separate the loading compartments; it is sufficient to turn the partition manually through a further 45° to make the roller 38 of the pin 34 roll along the profile 37, reaching its end again, so that said pin moves from the lower end position to the upper one, entering one of the holes 10 and locking the sliding of the carriage 3 along the respective longitudinal guide 2. The stability of the lower configuration (Figure 3), facilitated by the weight of the partition 4, is ensured by the spring/damper units 29, which apply to said partition a retention torque that tends to contrast its spontaneous rotations, since the second axis B lies below the imaginary plane Π on which the first and third axes A and C lie.

It has thus been shown that the invention achieves the proposed aim and objects.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

The disclosures in Italian Patent Application No. BO2002A000600 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A supporting assembly for tilt-down partition for bodies of trucks, trailers or the like, comprising at least one longitudinal guide (2) that is rigidly coupled to the ceiling of the body and a carriage (3) that can slide along said guide (2) and to which the front side of said partition (4) is articulated and can be manually orientated from a stable upper end configuration, in which it is arranged substantially horizontally, to a stable lower end configuration, in which it is arranged substantially vertically, in order to separate different storage compartments within said body, **characterized in that** it comprises cam-type means (5) for locking and releasing sliding of said carriage (3) along said guide (2) in said upper and lower configurations, said cam-type means being associated with said partition (4) and being adapted to allow the translational motion of said carriage (3) along said guide (2) in the intermediate configuration of said partition (4).

2. The supporting assembly according to claim 1, **characterized in that** a bracket (20) is fixed at the front side of said partition (4) and is articulated to the lower end (12) of said carriage (3) in its central portion about a first transverse horizontal axis (A), said bracket being articulated, in its end portion, about a second transverse horizontal axis (B), to respective first ends of two parallel springs (29), which are pivoted at the second opposite ends to the rear end (15) of said carriage (3) about a third transverse axis (C); when said partition (4) is in said upper configuration, said second axis (B) is arranged above the plane (Π) on which said first and third axes (A, C) lie; when said partition (4) is in said lower configuration, said second axis (B) is located below said plane (Π), so that the action of said springs (29) produces, in said upper and lower configurations, a retention torque that contrasts the spontaneous rotation of said partition (4) about said first axis (A).

3. The supporting assembly according to claims 1 and 2, **characterized in that** said cam-type locking and release means (5) comprise a pin (34), which is accommodated in a vertical through seat (19) that is formed in said carriage (3), said pin being associated in a downward region with a cam (35) that is rigidly coupled to said bracket (20) and is adapted to produce, by manual orientation of said partition (4), the vertical translational motion of said pin (34) between an upper end position and a lower end position, said pin (34), in said upper end position, being inserted in one of a plurality of holes (10) provided along said longitudinal guide (2) in order to block the translational motion of said carriage (3) in said upper and lower configurations of said partition (4); said pin (34), in said lower end position, when said partition (4) is in said intermediate configuration, being disengaged from said hole (10) in order to allow the translational motion of said carriage (3) along said longitudinal guide (2).

4. The assembly according to one or more of the preceding claims, **characterized in that** said pin (34) has a substantially fork-like base that is crossed by a lower pivot (39) for the rotary support of a roller (38), said cam (35) being shaped like a circular sector, being fixed to said bracket (20) along one of the straight sides, and being affected centrally by a contoured opening (36), which forms peripherally a rolling profile (37) for said roller (38).

5. The supporting assembly according to one or more of the preceding claims, **characterized in that** said pin (34) is associated with elastic means that are adapted, in said stable upper and lower configurations, to retain said pin (34) engaged in said hole (10), said elastic means comprising a helical spring (42) mounted coaxially along said pin (34), its lower end resting on a plate (18) that is rigidly coupled to said carriage (3), the upper end being actuated by the lower surface of a collar (40) that is substantially rigidly coupled at the centerline of said pin (34).

6. The supporting assembly according to one or more of the preceding claims, **characterized in that** said bracket (20) has two parallel side walls (21 ) that are perpendicular to the plane of said partition (4) and are provided in the central portion (24) with opposite holes (23) in which a pivot (22) is inserted along said first axis (A), said pivot being threaded at its ends, being locked by means of nuts (25), and having at least one reference and centering bush (26) keyed thereon for articulation to said carriage (3).

7. The supporting assembly according to one or more of the preceding claims, **characterized in that** said springs (29) are of the spring/damper unit type, arranged symmetrically with respect to said carriage (3), the cylinder (30) of each spring/damper unit having an eye (31) for pivoting to said carriage (3) about said third axis (C), the stem (32) being provided with a head (33) for the articulation of said bracket (20) to said side wall (21) about said second axis (B).

8. The supporting assembly according to one or more of the preceding claims, **characterized in that** a latch-type device (43) for retaining said partition (4) in said stable upper end configuration is mounted at the rear side of said partition (4) and abuts against a cross-member (50) that is rigidly coupled to a horizontal extension (51) of said carriage (3).
